# EUROPÄISCHE PATENTANMELDUNG

(11) **EP 0 699 718 A2**
(43) Veröffentlichungstag der Anmeldung: **06.03.1996**
(21) Anmeldenummer: 95810520.7
(22) Anmeldetag: 21.08.1995
(51) Int. Cl.: C09B 29/033, C09B 29/42

(54) **Azothiophenfarbstoffe mit einer 2,4,6-Triamino-3-cyanpyridin Kupplungskomponente**

(30) Priorität: 29.08.1994 CH 2639/94
(71) Anmelder: CIBA-GEIGY AG, CH-4002 Basel (CH)
(72) Erfinder: Schaetzer, Jürgen, D-79618 Rheinfelden (DE)

(57) **Zusammenfassung**

Die Farbstoffe der Formel 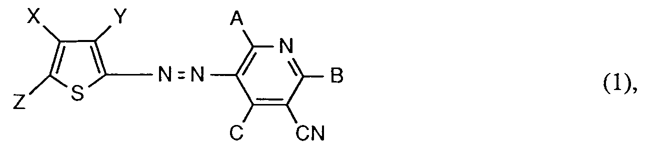
worin X Wasserstoff, Halogen, C₁-C₈-Alkyl oder unsubstituiertes oder durch Fluor, Chlor, Brom, Methyl, Methoxy oder Nitro substituiertes Phenyl; Y Cyan, C₁-C₄-Alkoxycarbonyl oder Nitro; Z Nitro, Cyan, Acetyl, Benzoyl, Formyl, -CH=C(CN)₂, -CH=C(CN)CO₂R oder unsubstituiertes oder durch C₁-C₄-Alkyl, C₁-C₄-Alkoxy, C₁-C₄-Alkoxy-C₁-C₄-alkyl, Phenyl oder (C₁-C₄-Alkyl)₁₋₂phenyl substituiertes Carbamoyl, wobei R C₁-C₄-Alkyl ist, oder X und Z oder Y und Z jeweils gleichzeitig C₁-C₄-Alkoxycarbonyl ist, und A, B und C unabhängig voneinander -NH₂ oder -N(R₁)R₂ bedeuten, und R₁ und R₂ unabhängig voneinander Wasserstoff, unsubstituiertes oder durch Hydroxy, C₁-C₄-Alkyl, Halogen oder C₁-C₄-Alkoxy substituiertes Phenyl, unsubstituiertes oder durch C₁-C₄-Alkyl substituiertes C₄-C₇-Cycloalkyl, oder unsubstituiertes oder durch Halogen, Cyan, C₂-C₄-Alkanoyloxy, Hydroxy, C₁-C₄-Alkoxy, Phenoxy oder Phenyl substituiertes C₁-C₁₈-Alkyl bedeuten, wobei der Phenyl- oder Phenoxyrest unsubstituiert oder durch Hydroxy, C₁-C₄-Alkyl, Halogen oder C₁-C₄-Alkoxy substituiert ist und der C₁-C₁₈-Alkylrest durch Sauerstoffatome unterbrochen sein kann, oder worin R₁ und R₂ zusammen mit dem sie verbindenden Stickstoffatom einen Piperidinyl-, Pyrrolidinyl- oder Morpholinylrest bilden, eignen sich zum Färben von Polyestermaterial in roten Farbtönen mit sehr guter Lichtechtheit.

## Beschreibung

Gegenstand der vorliegenden Erfindung sind Dispersionsfarbstoffe, Verfahren zu deren Herstellung sowie ihre Verwendung zum Färben von Textilmaterialien.

Die erfindungsgemässen Farbstoffe entsprechen der Formel 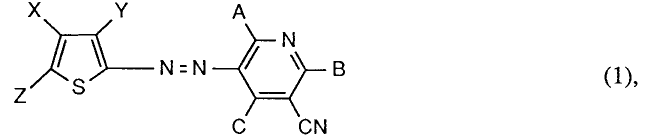
worin X Wasserstoff, Halogen, C₁-C₈-Alkyl oder unsubstituiertes oder durch Fluor, Chlor, Brom, Methyl, Methoxy oder Nitro substituiertes Phenyl; Y Cyan, C₁-C₄-Alkoxycarbonyl oder Nitro; Z Nitro, Cyan, Acetyl, Benzoyl, Formyl, -CH=C(CN)₂, -CH=C(CN)CO₂R oder unsubstituiertes oder durch C₁-C₄-Alkyl, C₁-C₄-Alkoxy, C₁-C₄-Alkoxy-C₁-C₄-alkyl, Phenyl oder (C₁-C₄-Alkyl)₁₋₂phenyl substituiertes Carbamoyl, wobei R C₁-C₄-Alkyl ist, oder X und Z oder Y und Z jeweils gleichzeitig C₁-C₄-Alkoxycarbonyl ist, und A, B und C unabhängig voneinander -NH₂ oder -N(R₁)R₂ bedeuten, und R₁ und R₂ unabhängig voneinander Wasserstoff, unsubstituiertes oder durch Hydroxy, C₁-C₄-Alkyl, Halogen oder C₁-C₄-Alkoxy substituiertes Phenyl, unsubstituiertes oder durch C₁-C₄-Alkyl substituiertes C₄-C₇-Cycloalkyl, oder unsubstituiertes oder durch Halogen, Cyan, C₂-C₄-Alkanoyloxy, Hydroxy, C₁-C₄-Alkoxy, Phenoxy oder Phenyl substituiertes C₁-C₁₈-Alkyl bedeuten, wobei der Phenyl- oder Phenoxyrest unsubstituiert oder durch Hydroxy, C₁-C₄-Alkyl, Halogen oder C₁-C₄-Alkoxy substituiert ist und der C₁-C₁₈-Alkylrest durch Sauerstoffatome unterbrochen sein kann, oder worin R₁ und R₂ zusammen mit dem sie verbindenden Stickstoffatom einen Piperidinyl-, Pyrrolidinyl- oder Morpholinylrest bilden.

Als C₁-C₄-Alkyl in Formel (1) kommt z.B. in Betracht: Methyl, Aethyl, Isopropyl, n-Propyl, Isobutyl, n-Butyl, sek.-Butyl, tert.-Butyl. Der C₁-C₈-Alkykest und der C₁-C₁₈-Alkylrest kann ausser den oben für C₁-C₄-Alkyl angegebenen Resten geradkettige oder verzweigte Alkylreste, wie z.B. Pentyl, Hexyl, Octyl, Decyl oder Undecyl, bedeuten.

Gegenstand der Erfindung sind die Farbstoffe der Formel (1) sowie die Mischung der Isomeren, z.B. worin A -NH₂, B der Rest der Formel -N(R₁)R₂ und C NH₂ ist, oder worin B -NH₂, A der Rest der Formel -N(R₁)R₂ und C NH₂ ist, oder worin C der Rest der Formel -N(R₁)R₂ und A oder B der Rest der Formel -N(R₁)R₂ und B oder A -NH₂ ist, oder diese Isomerenmischungen in Mischung mit der Verbindung, worin A und B -NH₂ und C -N(R₁)R₂, oder A, B und C -NH₂ oder -N(R₁)R₂ ist.

Als C₁-C₄-Alkoxycarbonyl kommt für Y und Z z.B. in Betracht: Methoxycarbonyl, Aethoxycarbonyl, Propoxycarbonyl, Butoxycarbonyl.

C₁-C₄-Alkoxy bedeutet in Formel (1) z.B. Methoxy, Aethoxy, Isopropoxy, n-Propoxy und n-Butoxy.

C₁-C₄-Alkoxy-C₁-C₄-alkyl bedeutet in Formel (1) z.B. Methoxyaethyl, Aethoxyäthyl.

Als (C₁-C₄-Alkyl)₁₋₂phenyl kommt z.B. Tolyl und Xylyl in Betracht.

Als C₄-C₇-Cycloalkyl kommt z.B. Cyclopentyl, Cyclohexyl oder Cycloheptyl in Betracht.

Unter Halogen ist in Formel (1) generell Fluor, Brom, Jod oder vor allem Chlor zu verstehen.

Als C₂-C₄-Alkanoyloxy kommt z.B. -O-CO-CH₃, -O-CO-C₂H₅ oder -O-CO-C₃H₇ in Betracht.

Bevorzugt sind Farbstoffe der Formel (1), worin X Wasserstoff, C₁-C₈-Alkyl oder unsubstituiertes oder durch Fluor, Chlor, Brom, Methyl, Methoxy oder Nitro substituiertes Phenyl; Y Cyan, C₁-C₄-Alkoxycarbonyl oder Nitro; Z Cyan, Acetyl, Benzoyl oder unsubstituiertes oder durch C₁-C₄-Alkyl, C₁-C₄-Alkoxy, C₁-C₄-Alkoxy-C₁-C₄-alkyl, Phenyl oder (C₁-C₄-Alkyl)₁₋₂phenyl substituiertes Carbamoyl, oder X und Z oder Y und Z jeweils gleichzeitig C₁-C₄-Alkoxycarbonyl ist, der Rest C -NH₂ bedeutet, und einer der Reste A oder B -NH₂ und der andere -N(R₁)R₂ bedeuten, und R₁ und R₂ unabhängig voneinander Wasserstoff, unsubstituiertes oder durch Hydroxy, C₁-C₄-Alkyl, Halogen oder C₁-C₄-Alkoxy substituiertes Phenyl, unsubstituiertes oder durch C₁-C₄-Alkyl substituiertes C₄-C₇-Cycloalkyl, oder unsubstituiertes oder durch Halogen, Cyan, C₂-C₄-Alkanoyloxy, Hydroxy, C₁-C₄-Alkoxy, Phenoxy oder Phenyl substituiertes C₁-C₁₈-Alkyl bedeuten, wobei der Phenyl- oder Phenoxyrest unsubstituiert oder durch Hydroxy, C₁-C₄-Alkyl, Halogen oder C₁-C₄-Alkoxy substituiert ist und der C₁-C₁₈-Alkylrest durch Sauerstoffatome unterbrochen sein kann, oder worin R₁ und R₂ zusammen mit dem sie verbindenden Stickstoffatom einen Piperidinyl-, Pyrrolidinyl- oder Morpholinylrest bilden.

Besonders bevorzugt sind Farbstoffe der Formel (1), insbesondere solche der Formel (1), worin C -NH₂ ist, und worin R₂ unsubstituiertes C₁-C₈-Alkyl oder einen Rest der Formel

-R₃-O-R₄-L (2),

worin R₃ C₂-C₄-Alkylen, R₄ C₂-C₈-Alkylen und L Wasserstoff, Hydroxy, -O-Phenyl, -O-C₁-C₈-Alkyl oder -OCO-C₁-C₈-Alkyl bedeuten.

In ganz besonders bevorzugten erfindungsgemässen Farbstoffen der Formel (1) bedeutet X unsubstituiertes C₁-C₈-Alkyl, insbesondere Methyl, vorzugsweise in Farbstoffen der Formel (1), worin C -NH₂ ist.

Wichtig sind Farbstoffe der Formel 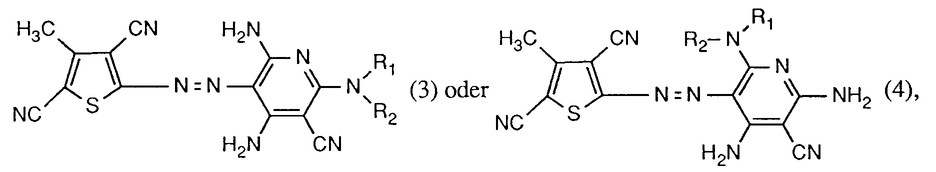
worin R₁ Wasserstoff ist, und R₂ die unter Formel (1) angegebene Bedeutung hat.

Besonders wichtig sind die Farbstoffe der Formel (3) oder (4), worin R₁ Wasserstoff und R₂ C₁-C₆-Alkyl, insbesondere n-Butyl, n-Pentyl oder n-Hexyl, C₁-C₃-Alkoxy-C₂-C₃-alkyl, Phenyl, Methoxyphenyl oder ein Rest der Formel

-R₅-O-R₆-Q (5)

ist, worin R₅ C₂-C₃-Alkylen, R₆ C₂-C₄-Alkylen und Q Phenoxy, C₁-C₄-Alkoxy oder Propionyloxy bedeutet, oder worin R₁ und R₂ zusammen mit dem sie verbindenden Stickstoffatom einen Pyrrolidinyl-, Piperidinyl- oder Morpholinylrest bilden.

Für die Isomerenmischungen gelten die identischen Bevorzugungen wie oben für die Reste X, Y, Z, A, B und C angegeben. Interessant sind Mischungen aus mindestens zwei Farbstoffen der Formel (1) worin X, Y, Z, A, B und C die als bevorzugt, besonders bevorzugt und ganz besonders bevorzugt angegebenen Bedeutungen haben. Besonders interessant sind ferner Mischungen enthaltend mindestens zwei Farbstoffe der Formeln (3) und (4).

Gegenstand der Erfindung ist auch ein Verfahren zur Herstellung der Farbstoffe der Formel (1). Die erfindungsgemässen Farbstoffe werden auf an sich bekannte Art und Weise hergestellt, beispielsweise indem man ein Amin der Formel 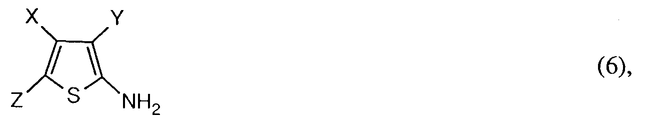
worin X, Y und Z die unter Formel (1) angegebenen Bedeutungen haben, diazotiert und auf eine Kupplungskomponente der Formel 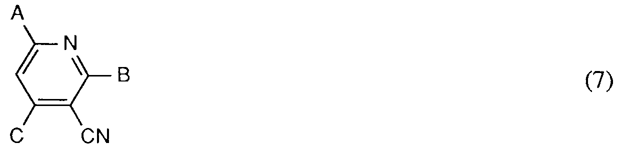
kuppelt, wobei A, B und C die unter der Formel (1) angegebenen Bedeutungen aufweisen.

Die Verbindungen der Formel (6) und (7) sind bekannt oder können auf an sich bekannte Art hergestellt werden und die Diazotierung und Kupplung erfolgen auf übliche Weise.

### Als Beispiel für Verbindungen der Formel (6) sei genannt: 2-Amino-3,5-dicyan-4-methyl-thiophen.

Als Beispiele für Verbindungen der Formel (7) seien genannt:
2,4-Diamino-5-cyan-6-n-butylaminopyridin, 2,4-Diamino-5-cyan-6-n-pentylaminopyridin, 2,4-Diamino-5-cyan-6-n-hexylaminopyridin.

Die Mischungen der Farbstoffe der Formel (1) lassen sich in Analogie zu bekannten Verfahren herstellen durch Kupplung diazotierter aromatischer Amine auf die entsprechenden Pyridinderivate. Die Kupplungskomponenten werden z.B. durch Umsetzung von Malodinitril mit Bromwasserstoff zu Brompyridin und anschliessendem Austausch des Bromatoms gegen einen Aminrest erhalten.

Eine weiterer Weg zur Herstellung von Mischungen der Verbindungen der Formel (1) erfolgt durch Dimerisierung von Malodinitril nach bekannten Methoden und anschliessender Kupplung mit einem diazotierten aromatischen Amin zu den entsprechenden Hydrazonen. Die anschliessende Umsetzung mit primären oder sekundären Aminen in Anwesenheit einer Carbonsäure liefert 2,4,6-Triaminopyridin-azofarbstoffgemische, in denen eine, zwei oder alle drei Positionen durch eine -NH₂-Gruppe oder -N(R₁)R₂ besetzt sind.

Die erfindungsgemässen Verbindungen der Formel (1) können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2½-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)cyclohexan; aus Polycarbonaten, z.B. solchen aus α,α-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2½-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich zum Färben nach dem Thermosol-Verfahren, im Ausziehverfahren und für Druckverfahren.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat zu überführen. Hierzu wird der Farbstoff vermahlen, so dass seine Teilchengrösse im Mittel zwischen 0,1 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem dem Polyestermaterial, egale rotorange oder rote Farbtöne von sehr guten Gebrauchs-Echtheiten, wie vor allem guter Lichtechtheit, Thermofixier-, Plissier-, Chlor- und Nassechtheit wie Wasser-, Schweiss- und Waschechtheit; die Ausfärbungen sind ferner gekennzeichnet durch sehr gute Reibechtheit. Besonders hervorzuheben ist die sehr gute Lichtechtheit der erhaltenen Färbungen bei hoher Brillanz. Die erfindungsgemässen Farbstoffe zeichnen sich ferner durch einen guten Aufbau, ausgezeichnete Sublimierechtheit und sehr gute Thermomigrationsechtheit aus.

Die erfindungsgemässen Farbstoffe können auch gut verwendet werden zur Herstellung von Mischnuancen zusammen mit anderen Farbstoffen oder zusammen mit einem geeigneten gelben und blauen Farbstoff für das Trichromie-Färben. Selbstverständlich können auch Mischungen der erfindungsgemässen Farbstoffe untereinander verwendet werden.

Wegen der sehr guten Lichtechtheit auch bei erhöhten Temperaturen sind die erfindungsgemässen Farbstoffe hervorragend geeignet für das Färben von PolyesterTextilmaterial für Autopolsterbezüge.

Die vorstehend genannten Verwendungen der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder es in dieses einzuarbeiten. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

In den folgenden Beispielen bedeuten Teile Gewichtsteile und Prozente beziehen sich, sofern nicht anders angegeben, auf das Gewicht. Die Temperaturen sind in Celsiusgraden angegeben.

### Beispiel 1:

30,5 Teile 2-Brom-3-cyan-4,6-diaminopyridin, 250 Teile Isopropanol, 51 Teile 2-Phenoxyethoxypropylamin und 32 Teile Kaliumcarbonat werden während 36 Stunden in einem Autoklaven bei einem Druck von 7-8 bar auf 120° erhitzt. Nach beendeter Reaktion wird überschüssiges Kaliumcarbonat abfiltriert und das Lösungsmittel am Rotationsverdampfer abdestilliert. Als Rückstand verbleibt ein dunkles Öl, welches die Verbindung der Formel 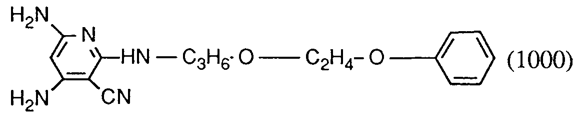
enthält. Das Rohprodukt kann für die nachfolgend beschriebene Kupplung weiter verwendet werden.

0,41 Teile 2-Amino-3,5-dicyan-4-methylthiophen werden in 6,4 Teilen 65%-iger Schwefelsäure unter Kühlung aufgelöst. In die Lösung gibt man tropfenweise unter weiterer Kühlung bei 0 bis 5° 0,88 Teile Nitrosylschwefelsäure (40%-ig) und rührt 90 Minuten bei dieser Temperatur nach. Überschüssige salpetrige Säure wird mit gemahlenem Harnstoff beseitigt. Die so erhaltene Diazolösung lässt man in eine Lösung von 0,82 Teilen 2-Phenoxyethoxypropylamino-3-cyan-4,6-diaminopyridin in 16 Teilen Eisessig/Propionsäure (Verhältnis 5:1) und 4 Teilen Wasser langsam zufliessen und rührt ca. 60 Minuten nach. Nach beendeter Kupplung wird der pH-Wert mit 10 Teilen Natronlauge (30%-ig) vorsichtig auf ca. 2,8 gestellt und zur Verdünnung mit 10 Teilen Wasser versetzt. Der gebildete Farbstoff der Formel 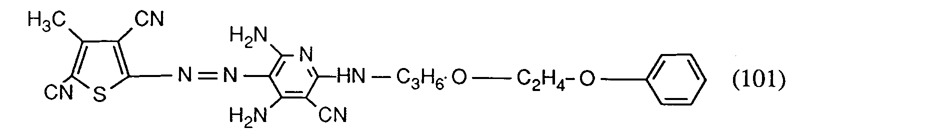
wird abfiltriert, mit Wasser gewaschen und getrocknet. Er färbt Polyesterfasern in brillanten roten Tönen von hervorragenden Echtheiten, insbesondere sehr guter Lichtechtheit.

### Beispiel 2:

Das gemäss Beispiel 1 erhaltene Diazotierungsgemisch wird in eine Lösung bestehend aus 0,57 Teilen n-Butylamino-3-cyan-4,6-diaminopyridin in 4 Teilen Eisessig/Propionsäure (Verhältnis 5:1) und 2 Teilen Wasser gegeben. Zur Verdünnung versetzt man tropfenweise mit 5 Teilen Wasser und stellt den pH-Wert mit 5 Teilen Natronlauge (30%-ig) auf 2,8 ein. Der gebildete Farbstoff wird abfiltriert, mit Wasser gewaschen und getrocknet. Er entspricht der Formel

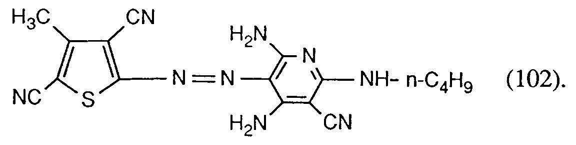

Er färbt Polyester in brillanten roten Tönen von vorzüglichen Echtheiten.

### Beispiele 3-54:

Auf analoge Weise wie in den Beispielen 1 und 2 beschrieben, erhält man die in der folgenden Tabelle aufgeführten Farbstoffe. Sie färben Polyesterfasern in roten Farbtönen.

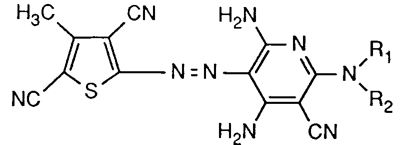

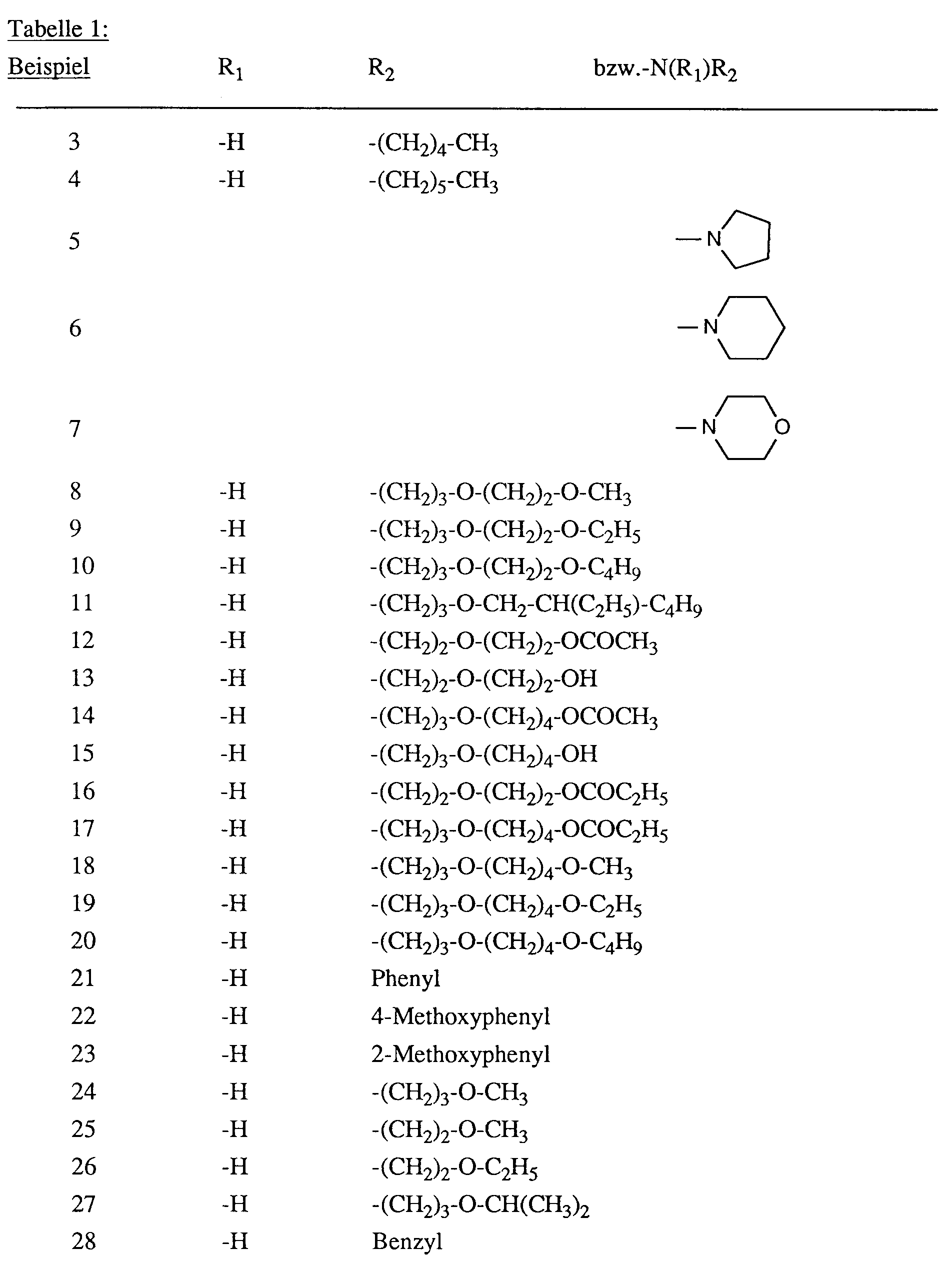

Auf analoge Weise wie in den Beispielen 1 und 2 beschrieben, erhält man die in der folgenden Tabelle aufgeführten Farbstoffe. Sie färben Polyesterfasern in roten Farbtönen.

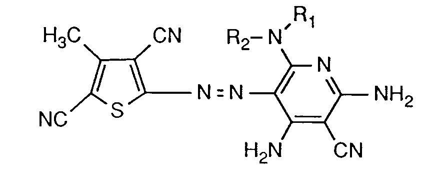

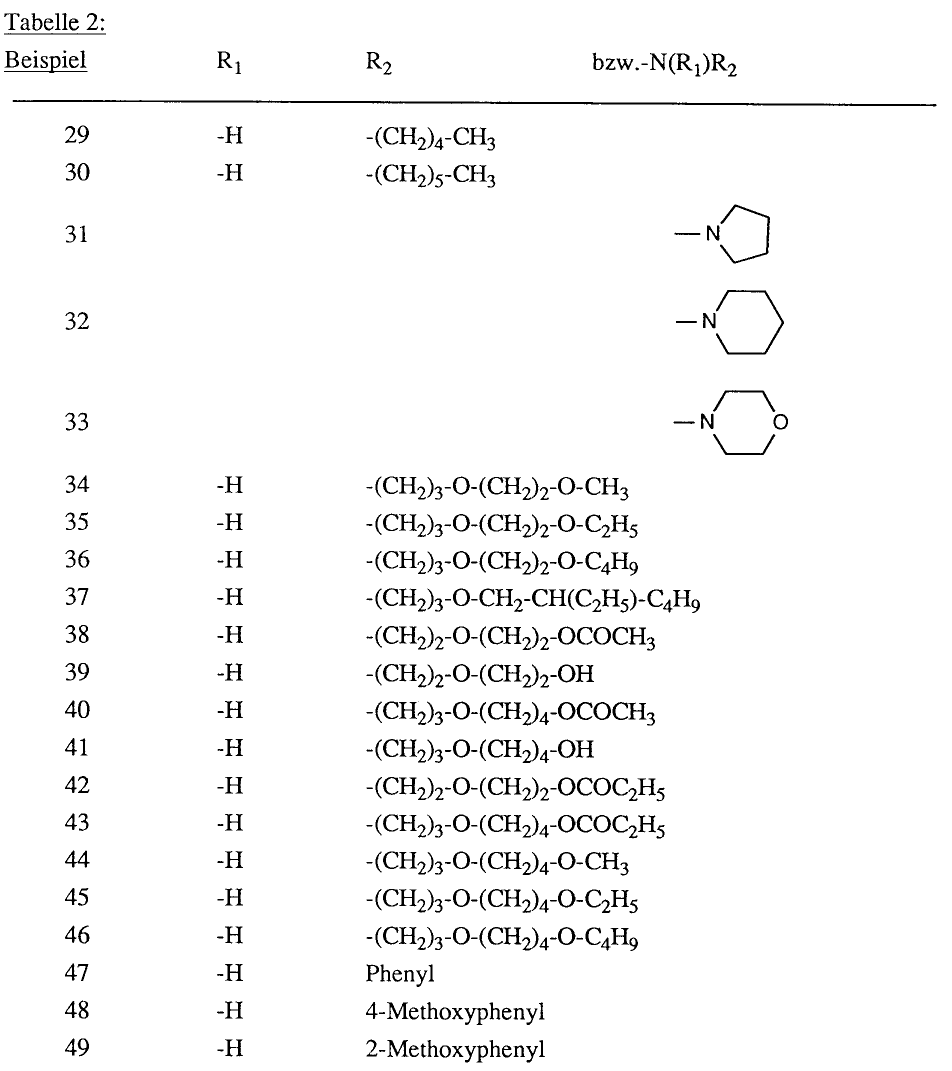

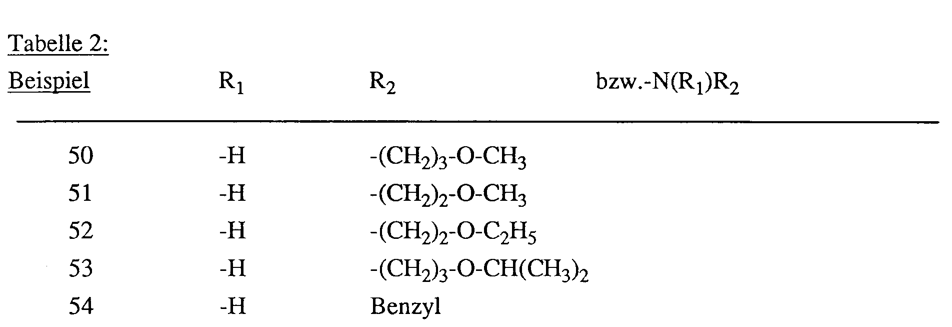

### Beispiel 55:

2,5 Teile des Farbstoffes, der analog Beispiel 1 erhalten wird, wobei man anstelle von 2-Amino-3,5-dicyan-4-methylthiophen von 2-Amino-3,5-dicyan-4-chlorthiophen ausgeht, werden zusammen mit 0,44 Teilen Malodinitril und o,33 Teilen Natriumacetat in 30 ml Propanol bei 20°C 2 Stunden gerührt. Danach werden nochmals 0,22 Teile Malodinitril zugefügt und das Ganze auf 50°C erwärmt. Nach weiteren 2 Stunden ist die Reaktion beendet. Das Reaktionsgemisch wird auf 20°C abgekühlt, der dunkle Niederschlag abfiltriert und mit 160 Teilen Propanol nachgewaschen und getrocknet. Man erhält 2,2 Teile des Farbstoffes der Formel 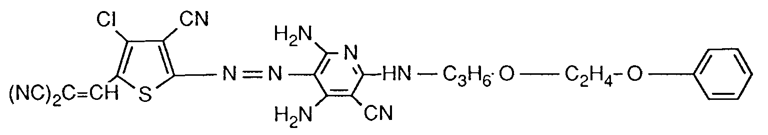
der Polyestermaterial in rotstichig blauen Tönen färbt.

### Beispiel 56:

1,7 Teile Eis werden mit 9,3 Teilen Schwefelsäure (100%-ig) versetzt, das Gemisch auf 20°C abgekühlt und mit 1,5 Teilen Eisessig verdünnt. Die Mischung kühlt man auf 0°C ab und gibt tropfenweise 3,5 Teile Nitrosylschwefelsäure (40%-ig) hinzu. In dieses Gemisch werden innert 15 Minuten unter Kühlung bei 0-5°C 1,84 Teile 2-Amino-3-cyano-4-chlor-5-formylthiophen eingetragen. Bis zur vollständigen Diazotierung lässt man ca. 2,5 Stunden bei 0-5°C nachrühren. Überschüssiges Nitrit wird mit Harnstoff entfernt.

Das auf diese Weise hergestellte Diazotierungsgemisch lässt man innert 30 Minuten in eine Lösung von 3,6 Teilen 2-Phenoxyethoxypropylamino-3-cyano-4,6-diaminopyridin in 15 Teilen Eisessig, 30 Teilen Wasser und 5 Teilen 1N Salzsäure zufliessen und rührt noch ca. 45 Minuten nach. Der pH-Wert wird durch Versetzen mit 28 Teilen Natonlauge (30%-ig) auf ca. 3 eingestellt. Der ausgefallene Farbstoff der Formel 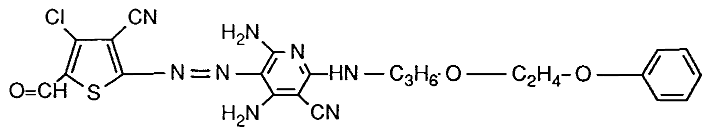
wird abfiltriert, salzfrei gewaschen und getrocknet. Er färbt Polyester mit rubinroter Nuance.

Auf analoge Weise wie in Beispiel 56 beschrieben, erhält man die in der folgenden Tabelle aufgeführten Farbstoffe. Sie färben Polyesterfasern in roten Farbtönen.

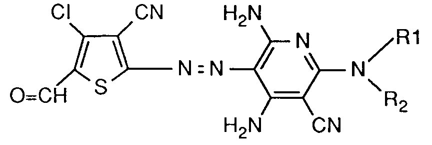

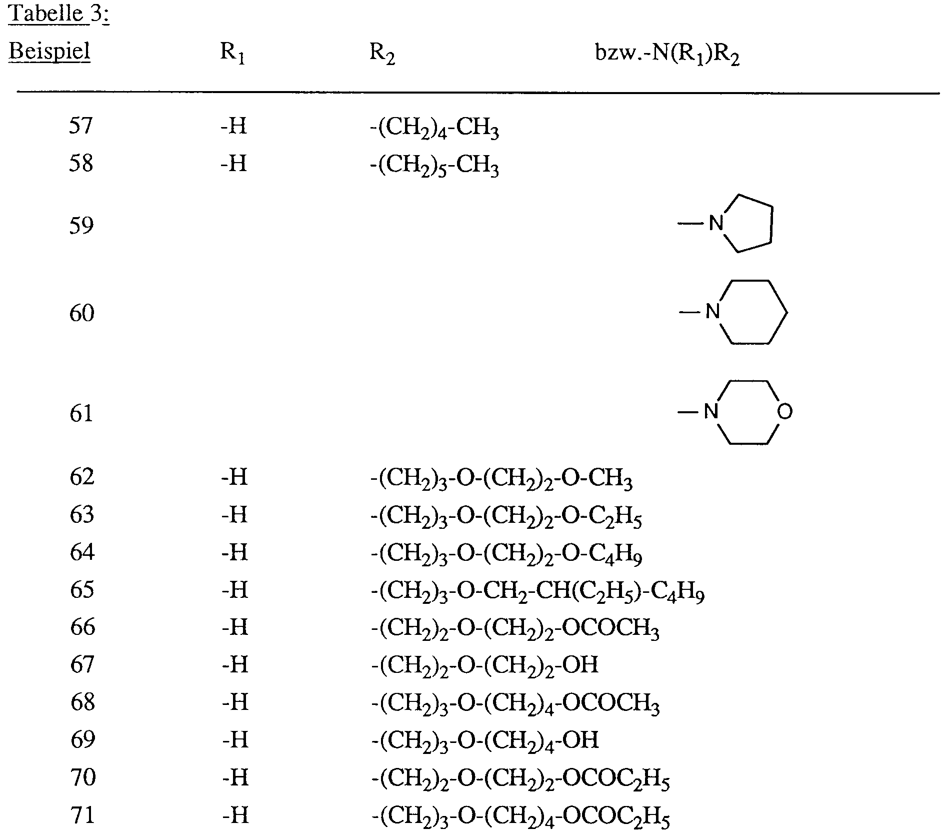

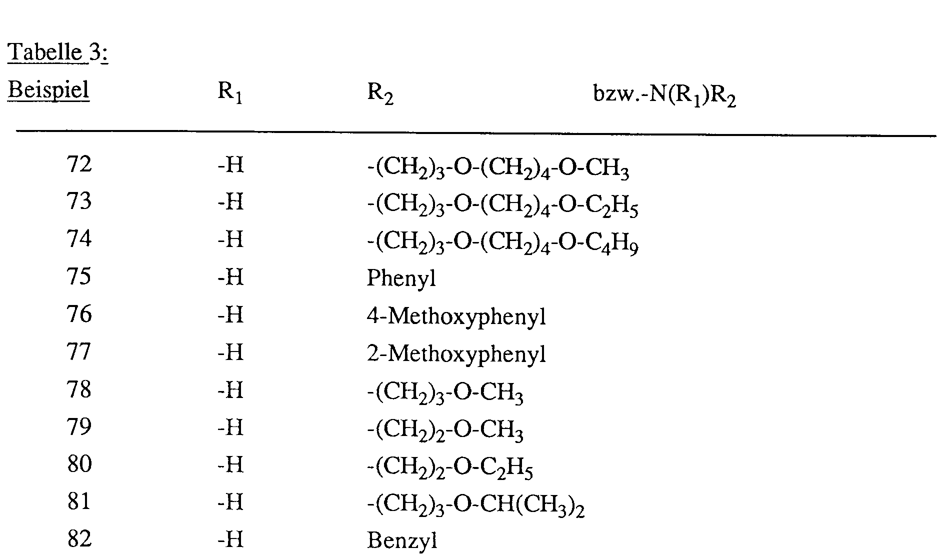

### Beispiel 83:

1 g des im Beispiel 1 beschriebenen Farbstoffs wird zusammen mit 17 g Wasser und 2 g eines handelsüblichen Dispergators vom Typ Dinaphthylmethandisulfonat in einer Sandmühle gemahlen und in eine 5%ige wässrige Dispersion überführt.

Mit dieser Formulierung wird im HT-Ausziehverfahren bei 130°C eine 1%ige Färbung (bezogen auf Pigment und Substrat) auf Polyestergewebe erstellt und reduktiv gereinigt. Die so erzielte rote Färbung weist sehr gute Gebrauchsechtheiten und insbesondere eine ausgezeichnete Lichtechtheit auf.

## Patentansprüche

1. Farbstoffe der Formel 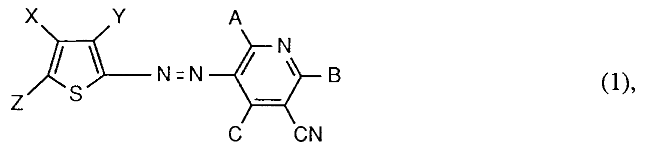 worin X Wasserstoff, Halogen, C₁-C₈-Alkyl oder unsubstituiertes oder durch Fluor, Chlor, Brom, Methyl, Methoxy oder Nitro substituiertes Phenyl; Y Cyan, C₁-C₄-Alkoxycarbonyl oder Nitro; Z Nitro, Cyan, Acetyl, Benzoyl, Formyl, -CH=C(CN)₂, -CH=C(CN)CO₂R oder unsubstituiertes oder durch C₁-C₄-Alkyl, C₁-C₄-Alkoxy, C₁-C₄-Alkoxy-C₁-C₄-alkyl, Phenyl oder (C₁-C₄-Alkyl)₁₋₂phenyl substituiertes Carbamoyl, wobei R C₁-C₄-Alkyl ist, oder X und Z oder Y und Z jeweils gleichzeitig C₁-C₄-Alkoxycarbonyl ist, und A, B und C unabhängig voneinander -NH₂ oder -N(R₁)R₂ bedeuten, und R₁ und R₂ unabhängig voneinander Wasserstoff, unsubstituiertes oder durch Hydroxy, C₁-C₄-Alkyl, Halogen oder C₁-C₄-Alkoxy substituiertes Phenyl, unsubstituiertes oder durch C₁-C₄-Alkyl substituiertes C₄-C₇-Cycloalkyl, oder unsubstituiertes oder durch Halogen, Cyan, C₂-C₄-Alkanoyloxy, Hydroxy, C₁-C₄-Alkoxy, Phenoxy oder Phenyl substituiertes C₁-C₁₈-Alkyl bedeuten, wobei der Phenyl- oder Phenoxyrest unsubstituiert oder durch Hydroxy, C₁-C₄-Alkyl, Halogen oder C₁-C₄-Alkoxy substituiert ist und der C₁-C₁₈-Alkylrest durch Sauerstoffatome unterbrochen sein kann, oder worin R₁ und R₂ zusammen mit dem sie verbindenden Stickstoffatom einen Piperidinyl-, Pyrrolidinyl- oder Morpholinylrest bilden.

2. Farbstoffe gemäss Anspruch 1, worin X Wasserstoff, C₁-C₈-Alkyl oder unsubstituiertes oder durch Fluor, Chlor, Brom, Methyl, Methoxy oder Nitro substituiertes Phenyl; Y Cyan, C₁-C₄-Alkoxycarbonyl oder Nitro; Z Cyan, Acetyl, Benzoyl oder unsubstituiertes oder durch C₁-C₄-Alkyl, C₁-C₄-Alkoxy, C₁-C₄-Alkoxy-C₁-C₄-alkyl, Phenyl oder (C₁-C₄-Alkyl)₁₋₂phenyl substituiertes Carbamoyl, oder X und Z oder Y und Z jeweils gleichzeitig C₁-C₄-Alkoxycarbonyl ist, der Rest C -NH₂ bedeutet, und einer der Reste A oder B-NH₂ und der andere -N(R₁)R₂ bedeuten, und R₁ und R₂ unabhängig voneinander Wasserstoff, unsubstituiertes oder durch Hydroxy, C₁-C₄-Alkyl, Halogen oder C₁-C₄-Alkoxy substituiertes Phenyl, unsubstituiertes oder durch C₁-C₄-Alkyl substituiertes C₄-C₇-Cycloalkyl, oder unsubstituiertes oder durch Halogen, Cyan, C₂-C₄-Alkanoyloxy, Hydroxy, C₁-C₄-Alkoxy, Phenoxy oder Phenyl substituiertes C₁-C₁₈-Alkyl bedeuten, wobei der Phenyl- oder Phenoxyrest unsubstituiert oder durch Hydroxy, C₁-C₄-Alkyl, Halogen oder C₁-C₄-Alkoxy substituiert ist und der C₁-C₁₈-Alkylrest durch Sauerstoffatome unterbrochen sein kann, oder worin R₁ und R₂ zusammen mit dem sie verbindenden Stickstoffatom einen Piperidinyl-, Pyrrolidinyl- oder Morpholinylrest bilden.

3. Farbstoffe gemäss einem der Ansprüche 1 und 2, worin R₂ unsubstituiertes C₁-C₈-Alkyl oder einen Rest der Formel
-R₃-O-R₄-L (2),
worin R₃ C₂-C₄-Alkylen, R₄ C₂-C₈-Alkylen und L Wasserstoff, Hydroxy, -O-Phenyl, -O-C₁-C₈-Alkyl oder -OCO-C₁-C₈-Alkyl bedeutet.

4. Farbstoffe gemäss einem der Ansprüche 1, 2 oder 3, worin X unsubstituiertes C₁-C₈-Alkyl, insbesondere Methyl ist.

5. Farbstoffe gemäss einem der Ansprüche 1 und 2 der Formel 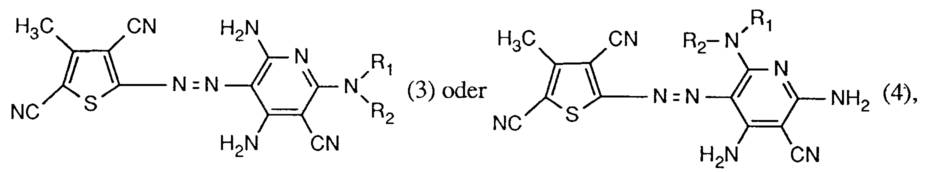 worin R₁ Wasserstoff ist, und R₂ die in Anspruch 1 angegebene Bedeutung hat.

6. Farbstoffe gemäss Anspruch 5, worin R₁ Wasserstoff und R₂ C₁-C₆-Alkyl, insbesondere n-Butyl, n-Pentyl oder n-Hexyl, C₁-C₃-Alkoxy-C₂-C₃-alkyl, Phenyl, Methoxyphenyl oder ein Rest der Formel
-R₅-O-R₆-Q (5)
ist, worin R₅ C₂-C₃-Alkylen, R₆ C₂-C₄-Alkylen und Q Phenoxy, C₁-C₄-Alkoxy oder Propionyloxy bedeutet, oder worin R₁ und R₂ zusammen mit dem sie verbindenden Stickstoffatom einen Pyrrolidiyl-, Piperidinyl- oder Morpholinylrest bilden.

7. Farbstoffmischungen, enthaltend mindestens zwei Farbstoffe der Formel (1) gemäss Anspruch 1.

8. Verfahren zur Herstellung von Farbstoffen der Formel (1) gemäss Anspruch 1, dadurch gekennzeichnet, dass man ein Amin der Formel 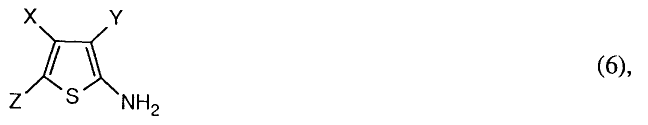 worin X, Y und Z die in Anspruch 1 angegebenen Bedeutungen haben, diazotiert und auf eine Kupplungskomponente der Formel 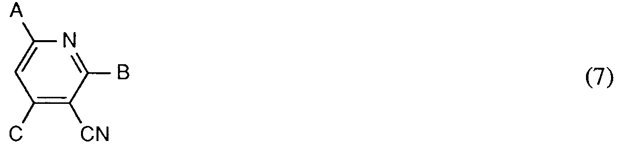 kuppelt, wobei A, B und C die in Anspruch 1 angegebenen Bedeutungen haben.

9. Verwendung der Dispersionsfarbstoffe gemäss Anspruch 1 zum Färben oder Bedrucken von halbsynthetischem oder synthetischem hydrophobem Fasermaterial, insbesondere Textilmaterial.

10. Verwendung nach Anspruch 9 zum Färben oder Bedrucken von Textilmaterial aus Polyesterfasern.

11. Verfahren zum Färben oder Bedrucken von halbsynthetischem oder synthetischem hydrophobem Fasermaterial, insbesondere Textilmaterial, dadurch gekennzeichnet, dass man eine oder mehrere der im Anspruch 1 definierten Verbindungen auf das genannte Material aufbringt oder diesem einverleibt.

12. Verfahren nach Anspruch 11, worin das hydrophobe Fasermaterial, vorzugsweise Textilmaterial, aus Polyesterfasern besteht.

13. Das gemäss Anspruch 11 oder 12 gefärbte oder bedruckte Material.
